Europäisches Patentamt

European Patent Office

Office européen des brevets

(19)

(11) **EP 0 953 373 A2**

(12) **EUROPÄISCHE PATENTANMELDUNG**

(43) Veröffentlichungstag:
03.11.1999 Patentblatt 1999/44

(51) Int. Cl.[6]: **B01D 47/00**, B01D 53/14,
B01D 53/78

(21) Anmeldenummer: 99106219.1

(22) Anmeldetag: 12.04.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 20.04.1998 DE 19817468

(71) Anmelder:
BASF AKTIENGESELLSCHAFT
67056 Ludwigshafen (DE)

(72) Erfinder:
• Sachweh, Bernd, Dr.
67125 Dannstadt-Schauernheim (DE)
• Ulbrich, Michael-Dieter, Dr.
67251 Freinsheim (DE)
• Weissker, Wolf-Steffen
67166 Otterstadt (DE)

(74) Vertreter:
Isenbruck, Günter, Dr. et al
Patent- und Rechtsanwälte Bardehle-
Pagenberg-Dost-Altenburg-Geissler-Isenbruck
Theodor-Heuss-Anlage 12
68165 Mannheim (DE)

(54) **Verfahren zur Entfernung von Verunreinigungen aus einem Gasstrom**

(57) Die Erfindung betrifft ein Verfahren zur Entfernung von gasförmigen Verunreinigungen und Aerosolen aus einem dampfgesättigten Gasstrom, bei dem ein Gasstrom, enthaltend

a) mindestens eine in einer Waschflüssigkeit gegebenenfalls unter Salzbildung lösliche gasförmige Verunreinigung und

b) mindestens ein Aerosol mit einer Partikelgröße von 0,01 bis 10 µm,

in einer Waschkolonne mit einer Waschflüssigkeit in Kontakt gebracht wird, deren Temperatur um mindestens 2°C geringer ist als die Temperatur des Gasstroms, wobei sich eine Dampfphase ausbildet, deren Sättigungsgrad S größer als 1 ist und die gasförmigen und partikelförmigen Verunreinigungen aus dem Gasstrom entfernt werden.

EP 0 953 373 A2

**Beschreibung**

Die Erfindung betrifft ein Verfahren zur Entfernung von gas- und partikelförmigen Verunreinigungen (Aerosolen) aus einem dampfgesättigten Gasstrom, bei dem ein Gasstrom, enthaltend mindestens eine gasförmige Verunreinigung und mindestens ein Aerosol so mit einer Waschflüssigkeit in Kontakt gebracht wird, wobei sich eine Dampfphase ausbildet, deren Sättigungsgrad S größer als 1 ist.

Die voranschreitende Industrialisierung der Lebensmittel- und Konsumgüterproduktion hat in der Vergangenheit häufig zu einer erhöhten Schadstoffbelastung der Luft, insbesondere in industriellen Ballungszentren, geführt. Durch gesetzliche Maßnahmen konnten die Emissionen von Großfeuerungsanlagen für $SO_2$, $NO_x$ und Staub in den letzten Jahren um ca. 80% gesenkt werden.

Die Festlegung von Schadstoffgrenzwerten für Emissionen und Immissionen erfolgt - mit wenigen Ausnahmen (z. B. bei faserartigen Stäuben) - häufig in Form von Massekonzentrationen, wodurch submikronen Partikeln in dieser Bewertung eine nur geringe Bedeutung zukommt. So sind in Deutschland nach der 17. Verordnung zum Bundes-Immissionsschutzgesetz (17. BImschV, 1990) für staubförmige Verunreinigungen im Abgas einer Abfallverbrennungsanlage bis zu 10 mg/m$^3$ (im Normzustand) zulässig. Damit erhält man für eine Partikelgröße von 0,1 µm bereits eine Partikeloberfläche von 0,28 m$^2$/m$^3$ Abgas. Daran wird deutlich, daß submikrone Partikel bereits eine extrem große Oberfläche bereitstellen, auf der Stoffe mit hohem gesundheitsgefährdendem Potential angelagert sein können. Solche Stoffe sind beispielsweise Schwermetalle oder viele hochtoxische gasförmige und flüssige Komponenten, beispielsweise auch Kernspaltprodukte.

Oftmals treten in verfahrenstechnischen Prozessen, z. B. hinter Anlagen zur Verbrennung von Produktionsrückständen, neben gasförmigen Stoffen (beispielsweise HCl, HF, HBr oder Schwermetalldämpfe) auch feste oder flüssige Aerosole auf Die gasförmigen Verunreinigungen werden üblicherweise in Waschkolonnen (Absorptionskolonnen) ausgewaschen. Die beim Verbrennungsprozeß gebildeten Aerosole sind jedoch in der Regel sehr fein und durchlaufen die Waschkolonnen häufig, ohne daß eine nennenswerte Mengenreduzierung solcher Verunreinigungen stattfindet.

Bei der Verbrennung von Produktionsrückständen treten beispielsweise NaCl-Aerosole in Konzentrationen bis zu etwa 250 mg/m$^3$ auf. Die Größenverteilung solcher Aerosole liegt dabei deutlich im submikronen Bereich. Deshalb müssen Tiefbettdiffusionsfilter, Naßwäscher (z. B. Venturiwäscher) oder Elektrofilter nachgeschaltet werden. Diese Standardverfahren weisen in der Regel hohe Investitions- oder Betriebskosten oder beides auf.

Die aus dem Stand der Technik bekannten Abscheideverfahren sind in der Regel nicht dazu in der Lage, alle erforderlichen Reinigungsfunktionen gleichzeitig zu erfüllen. D. h., daß sie nur entweder dazu in der Lage sind, eine ausreichende Entfernung partikelförmiger Verunreinigungen zu gewährleisten oder lediglich gasförmige Schadstoffe aus dem Gasstrom entfernen können. So beschreibt die Veröffentlichung "Abscheidung submikroner Partikel aus Gasströmen in Fullkörperschüttungen" von S. Heidenreich, H. Büttner und F. Ebert (Chemie Ingenieur Technik (69), 1997, S. 110 ff.) ein Verfahren zur Entfernung partikelförmiger Verunreinigungen aus Gasströmen. Hierbei wird ein Gasstrom in einer mit Füllkörpern befüllten Waschkolonne im Gegenstrom einer Waschflüssigkeit ausgesetzt. Das beschriebene Verfahren wird zweistufig durchgeführt, wobei in einer ersten Stufe mit warmem Wasser und in einer zweiten Stufe mit kaltem Wasser gewaschen wird. Das beschriebene Verfahren erlaubt jedoch keine befriedigende simultane Abscheidung partikelförmiger und gasförmiger Verunreinigungen.

Verfahren zur Verringerung der Menge an gasförmigen Verunreinigungen in einem Gasstrom sind in großer Zahl aus dem Stand der Technik bekannt. Beispielhaft sei hierzu auf die Monographie "Abgasreinigung" von M. Schulte (Springer-Verlag, Berlin, Heidelberg, New York, 1996) verwiesen. Die Monographie nennt eine Vielzahl von Standardverfahren, die sich mit der Verringerung von Schwefel-, Stickstoff-, Kohlenstoff- und Halogenverbindungen in Abgasen sowie mit der Verringerung von Kohlenwasserstoffemissionen befassen.

Nachteilig wirkt sich bei allen aus dem Stand der Technik bekannten Verfahren jedoch aus, daß sie jeweils entweder nur die Entfernung gasförmiger Verunreinigungen oder partikelförmiger Aerosole erlauben. Um die Entfernung beider Verunreinigungstypen aus einem Abgasstrom zu erreichen, müssen daher üblicherweise zwei Verfahrensschritte hintereinander geschaltet werden. Dies erfordert jedoch in der Praxis hohe Investitionen, da zwei in der Regel unterschiedliche Anlagentypen bereitgestellt werden müssen. Weiterhin erhöht diese Vorgehensweise die Betriebskosten, da jede Stufe in der Regel einen hohen Energie- und Wasserverbrauch aufweist.

Es bestand daher ein Bedürfnis nach einem Verfahren zur gleichzeitigen Entfernung von gas- und partikelförmigen Verunreinigungen aus Gasströmen, das in einer einzigen Verfahrensstufe die Entfernung beider Typen von Verunreinigungen aus dem Gasstrom erlaubt. Es war daher eine Aufgabe der Erfindung, ein solches Verfahren zur Verfügung zu stellen.

Es wurde nun gefunden, daß die Entfernung beider Typen von Verunreinigungen aus Gasströmen möglich ist, wenn ein dampfgesättigter Gasstrom, der beide Typen von Verunreinigungen enthält, durch eine Waschkolonne geleitet wird, die eine, beispielsweise durch Füllkörper hervorgerufene, innere Oberfläche von mindestens etwa 100 m$^2$/m$^3$ aufweist und dabei mit einem Sättigungsgrad S gearbeitet wird, der größer als 1 ist. Unter einer "inneren Oberfläche" wird im Rahmen des vorliegenden Textes die Oberfläche im Inneren der Waschkolonne verstanden, die zum Kontakt zwischen Gasstrom und Waschflüssigkeit zur Verfügung steht. Die innere Oberfläche wird im weiteren Verlauf des Textes auch mit "Kontaktfläche" bezeichnet.

Gegenstand der Erfindung ist daher ein Verfahren zur Entfernung von gasförmigen Verunreinigungen und Aerosolen aus einem dampfgesättigten Gasstrom, bei dem ein Gasstrom, enthaltend

a) mindestens eine in einer Waschflüssigkeit gegebenenfalls unter Salzbildung lösliche gasförmige Verunreinigung und
b) mindestens ein Aerosol mit einer Partikelgröße von 0,01 bis 10 μm,

mit einer Strömungsgeschwindigkeit von mindestens 0,5 m/s und einer Temperatur von 30°C bis 100°C in einer Waschkolonne, die eine innere Oberfläche von 50 bis 1.000 m$^2$/m$^3$ aufweist, gegebenenfalls nach vorangehender Sättigung mit Dampf mit einer Waschflüssigkeit, die eine Zulaufgeschwindigeit Z zur Waschkolonne aufweist, in Kontakt gebracht wird deren Temperatur um mindestens 2°C geringer ist als die Temperatur des Gasstroms, wobei sich eine Dampfphase ausbildet, deren Sättigungsgrad S größer als 1 ist und die gasförmigen und partikelförmigen Verunreinigungen aus dem Gasstrom entfernt werden.

Geeignete Gasströme sind grundsätzlich alle Gasströme, die ein bei der Verfahrenstemperatur zu reinigendes Trägergas aufweisen, das sowohl gasförmige als auch partikelförmige zu entfernende Verunreinigungen aufweist.

Als Trägergas besonders geeignet sind in der Regel Gase, die unter den Verfahrensbedingungen mit keiner der am Verfahren beteiligten Komponenten, d. h. weder mit der Waschflüssigkeit noch mit einem Material der Vorrichtung, in der das erfindungsgemäße Verfahren betrieben wird, eine Reaktion eingehen. In einer bevorzugten Ausführungsform der Erfindung handelt es sich daher bei dem zu reinigenden Trägergas um ein unter den Reaktionsbedingungen weitgehend inertes Gas oder Gasgemisch, dessen Siedepunkt unterhalb mindestens etwa -50°C liegt. Beispiele für zu reinigende Gase sind Stickstoff, Wasserstoff, Sauerstoff, Kohlendioxid, Helium, Neon, Argon, Krypton oder Gemische aus zwei oder mehr der genannten Gase.

In einer bevorzugten Ausführungsform der Erfindung handelt es sich beim zu reinigenden Trägergas um ein Gasgemisch, wie es bei der Verbrennung von Produktionsrückstanden, beispielsweise in der Müllverbrennung, entsteht.

Der beim Betrieb des erfindungsgemäßen Verfahrens eingesetzte Gasstrom sollte dampfgesättigt sein. Vorzugsweise sollte die Dampfphase vollständig mit Dampf derjenigen Flüssigkeit gesättigt sein, die im nachfolgenden Verfahren als Waschflüssigkeit eingesetzt wird.

Unter "dampfgesättigt" wird der Zustand verstanden, bei dem die Dampfphase einen in Abhängigkeit von Druck und Temperatur maximalen Gehalt an Molekülen der jeweiligen Verbindung aufweist. Der Sättigungsgrad S wird in diesem Fall mit 1 bezeichnet. Enthält die Dampfphase weniger Moleküle der entsprechenden Verbindung, so ist der Sättigungsgrad S kleiner als 1, sind es mehr Moleküle, so ist der Sättigungsgrad S größer als 1. Der letztgenannte Zustand wird auch als "Übersättigung" bezeichnet.

Die Sättigung der Dampfphase sollte, wie bereits erwähnt, vorzugsweise mit Molekülen derjenigen Verbindung erfolgen, die im Laufe des weiteren Verfahrens als Waschflüssigkeit eingesetzt wird.

Als "Waschflüssigkeit" wird diejenige Flüssigkeit bezeichnet, die im Rahmen des erfindungsgemäßen Verfahrens zur Entfernung der gas- und partikelförmigen Verunreinigungen aus dem Gasstrom eingesetzt wird.

Das erfindungsgemäße Verfahren eignet sich grundsätzlich zum Entfernen beliebiger gas- und partikelförmiger Verunreinigungen aus beliebigen Gasströmen, sofern die folgenden Bedingungen erfüllt sind:

- Das Trägergas darf nicht oder nur zu einem geringen Teil von der Waschflüssigkeit absorbiert werden oder in der Waschflüssigkeit, ggf. unter chemischer Veränderung, löslich sein.

- Die gasförmigen Verunreinigungen müssen von der Waschflüssigkeit stark, bevorzugt möglichst vollständig, absorbiert werden oder in der Waschflüssigkeit, ggf. unter chemischer Abwandlung, löslich sein.

- Die partikelförmigen Verunreinigungen sollten in der Waschflüssigkeit, ggf. unter chemischer Abwandlung, löslich oder zumindest in ihr suspendierbar sein.

Es können daher im Rahmen des erfindungsgemäßen Verfahrens sowohl polare als auch unpolare Wauchflüssigkeiten eingesetzt werden, je nachdem, welche gasförmigen und partikelförmigen Verunreinigungen im Gasstrom enthalten sind. In einer bevorzugten Ausführungsform wird im Rahmen der vorliegenden Erfindung jedoch eine Waschflüssigkeit eingesetzt, deren zumindest überwiegender Bestandteil Wasser ist. Geeignet sind als Waschflüssigkeit beispielsweise destilliertes Wasser, vollentsalztes Wasser, Leitungswasser, Prozeßwasser, wäßrige Lösungen von Säuren oder Basen, oder organische Lösemitttel wie Toluol, Butanol, Ethanol oder Aceton.

Mit dem erfindungsgemäßen Verfahren können auch Gasströme behandelt werden, die zunächst nicht die erforderliche Dampfsättigung aufweisen. Hierzu wird in einer dem eigentlichen erfindungsgemäßen Verfahren vorgeschalteten Sättigungsstufe eine Beladung des Gasstroms mit Dampf bis zur vollständigen Sättigung durchgeführt.

Zu den durch das erfindungsgemäße Verfahren entfernbaren gasförmigen Verunreinigungen zählen beispielsweise wasserlösliche gasförmige Verunreinigungen. Hierunter sind Verunreinigungen zu verstehen, die in der Waschflüssigkeit so gut löslich sind, daß die Wäsche des Gasstroms eine vollständige Entfernung der gasförmigen Verunreinigung erlaubt. Wird beispielsweise Wasser als Waschflüssigkeit verwendet, so lassen sich hiermit beispielsweise die Halogenwasserstoffsäuren, HF, HCl oder HBr problemlos aus dem Gasstrom entfernen. Ebenfalls entfernbar sind schwefelhaltige, gasförmige Verunreinigungen, beispielsweise Schwefeldioxid, Schwefelwasserstoff, Schwefelkohlenstoff, Kohlenoxidsulfide, Schwefelhalogene oder Schwefeltrioxid. Weiterhin durch Wasser als Waschflüssigkeit entfernbar sind Stickoxide, Ammoniak, Cyanwasserstoff, Chlorcyanphosgen und dergleichen.

Zu den im Rahmen des erfindungsgemäßen Verfahrens entfernbaren partikelförmigen Verunreinigungen (Aerosolen) zählen sowohl feste als auch flüssige Aerosole. Dies können beispielsweise Aerosole sein, wie sie bei der Rückstandsverbrennung oder bei der Rauchgasreinigung in Gasströmen vorkommen. Insbesondere sind dies die Alkalihalogenide wie NaCl, NaBr, NaF, KF, KBr oder KCl, sowie Ammoniumsalze, beispielsweise Ammoniumnitrat, die Alkalimetallnitrate, -sulfate und weitere, wasserlösliche Salze, beispielsweise Schwermetallsalze von Hg, Pb oder Cd sowie Feststoffe, die nicht vollständig benetzend aber wasserdispergierbar sind, beispielsweise Ruß.

Weiterhin kommen flüssige partikelförmige Verunreinigungen in Frage. Hierzu zählen beispielsweise Säuren, insbesondere Schwefelsäure- oder Salpetersäuretröpfchen oder deren Gemisch.

Das erfindungsgemäße Verfahren läßt sich mit Gesströmen durchführen, die eine Partikelbeladung in der Größenordnung von bis zu etwa 500 mg/m$^3$, vorzugsweise bis zu etwa 250 mg/m$^3$ aufweisen. Die Partikelgrößen des Aerosols können sich in einem Bereich von etwa 0,01 bis etwa 100 μm bewegen, die Untergrenze liegt bei etwa 10 bis etwa 20 nm, besonders vorteilhafte Wirkungen ergeben sich bei einer Partikelgröße von etwa 0,05 bis 1 μm, beispielsweise etwa 0,1, 0,2, 0,4, 0,8 oder 0,9 μm

Das erfindungsgemäße Verfahren wird vorteilhafterweise in einer oder mehreren parallel oder hintereinander geschalteten Waschkolonnen durchgeführt. Der Durchmesser der Waschkolonne kann dabei etwa 0,1 bis etwa 4 m betragen, die Länge der Waschkolonne etwa 0,5 bis etwa 10 m.

Grundsätzlich sind alle Waschkolonnen geeignet, in denen die erforderliche Kontaktfläche angeboten wird. Dies können beispielsweise Füllkörperkolonnen, Bodenkolonnen oder Sprühwäscher sein. In einer bevorzugten Ausführungsform der vorliegenden Erfindung werden jedoch Waschkolonnen eingesetzt, die über eine Füllkörperschüttung verfügen. Geeignete Füllkörper weisen einen Durchmesser von etwa 3 bis etwa 50 mm auf. Vorzugsweise werden solche Füllkörper eingesetzt, die eine Kontaktfläche der Waschkolonne von etwa 300 bis etwa 600 m$^2$/m$^3$ ergeben.

Als Füllkörper geeignet sind beispielsweise Füllkörper der Firma Rauschert, beispielsweise High Flow 25, weiterhin Raschig Pall-Ringe mit einem Durchmesser von etwa 25 mm, Sulzer-Packungen, Raschig Ralu-Pack oder Füllungen aus Monofilamentgewebe.

Die Temperatur des Gasstroms bei Eintritt in die Kolonne kann bis zu etwa 100°C betragen. In einer bevorzugten Ausführungsform der Erfindung betragt die Temperatur des Gasstroms etwa 40 bis etwa 90°C, insbesondere etwa 50 bis etwa 80°C, beispielsweise 60 oder 70°C.

Die Temperatur der Waschflüssigkeit sollte niedriger liegen als die Temperatur des Gasstroms. In einer bevorzugten Ausführungsform der vorliegenden Erfindung liegt die Temperatur der Waschflüssigkeit mindestens etwa 10 bis etwa 15°C unterhalb der Temperatur des Gasstroms, insbesondere jedoch noch weiter darunter. Besonders bevorzugte Temperaturdifferenzen sind beispielsweise etwa 30 bis etwa 60°C, insbesondere etwa 40 bis etwa 50°C.

In einer bevorzugten Ausführungsform weist die Waschflüssigkeil eine Temperatur von etwa 2 bis etwa 50 °C auf.

Soll das erfindungsgemäße Verfahren zur Reinigung besonders heißer Gas-ströme eingesetzt werden, wie sie beispielsweise in Verbrennungsanlagen entstehen, so muß der Gasstrom in der Regel vor dem Eintritt in die Waschkolonne auf die oben angegebene Temperatur gekühlt werden. Dies geschieht vorteilhafterweise durch Quench-Verfahren, bei denen eine Kühlflüssigkeit, vorzugsweise diejenige Flüssigkeit, die später auch als Waschflüssigkeit eingesetzt wird, in den heißen Gasstrom eingesprüht wird. Dies kann beispielsweise in einem Sprühwäscher oder Quench geschehen. Im Rahmen eines solchen Kühlverfahrens findet in der Regel eine Dampfsättigung des Gasstroms statt. Eine solche Vorbehandlung kann sich auf die weitere Abscheidung der parikelförmigen Verunreinigungen, insbesondere bei löslichen salzförmigen Verunreinigungen, in der nachfolgenden erfindungsgemäßen Waschstufe vorteilhaft auswirken.

In einer bevorzugten Ausführungsform der Erfindung werden daher Gasströ-me, deren Temperatur größer als etwa 100°C ist, vor der Einspeisung in die Waschkolonne durch Einsprühen von Flüssigkeit, insbesondere von Waschflüssigkeit, vorzugsweise in einem Sprühwäscher oder Quench, auf eine Temperatur unter 100°C gekühlt, die der geforderten Eintrittstemperatur in die Waschkolonne entspricht.

Als Grundlage für den Erfolg des erfindungsgemäßen Verfahrens wird angenommen, daß bei Eintritt des warmen, dampfgesättigten Gasstroms in die von der kälteren Waschflüssigkeit durchströmte Waschkolonne an den kalten Oberflächen in der Waschkolonne eine Dampfübersättigung des Dampfraums im Gasstrom eintritt.

Der Sättigungszustand im Dampfraum wird als Sättigungsgrad S ausgedrückt, der bei vollständiger Sättigung den Wert 1 annimmt.

Die Erzeugung der Übersättigung erfolgt durch Kontakt des warmen, dampfgesättigten Gasstroms mit kalten Oberflächen. Dazu wird das warme dampfgesättigte Abgas im Gleich- oder Gegenstrom in eine mit kaltem Wasser berieselte Waschkolonne geleitet. Je nach Wahl der Betriebsparameter können durch den oberflächenlimitierten Wärme- und Stoffübergang unterschiedliche Übersättigungen im Gasstrom erreicht werden. Vorzugsweise wird die Übersättigung so eingestellt, daß der untere Teil der Füllkörperschüttung im wesentlichen einer Tropfenbildung an den partikelförmigen Verunreinigungen, hervorgerufen durch Kondensation aus dem übersättigten. Dampfraum an den Partikeln, und der obere Teil der Waschkolonne zur Abscheidung der Tropfen genutzt wird.

Um die Betriebsparameter der Waschkolonne möglichst optimal zu gestalten ist es vorteilhaft, wenn für eine bestimmte Waschkolonne mit einer bestimmten, vorzugsweise durch Füllkörper hervorgerufenen Oberfläche, in jedem Bereich der Kolonne der Sättigungsgrad S bekannt ist. So lassen sich Parameter wie die Temperatur des Gasstroms, die Temperatur der Waschflüssigkeit die Länge der Waschkolonne oder die innere Oberfläche der Waschkolonne optimieren.

Durch eine segmentweise Berechnung des gekoppelten Stoff-Wärmeübergangs kann ein Temperatur- und Konzentrationsprofil für eine Waschkolonne im Gegen- und Gleichstrom berechnet werden. Für eine im Gegenstrom betriebene Kolonne kann beispielsweise der kommerziell erhältliche Stoff-Wärmeübergangssimulator "ASPEN RATEFRAC"[®] (Hersteller: ASPEN Technology, Cambridge, Mass., USA). Hierzu wird die Waschkolonne rechnerisch in einzelne Segmente unterteilt und in jedem Segment i die Partialdrucke $p_i$ der gasförmigen Komponenten berechnet.

In den einzelnen Segmenten stehen jedoch die Gas- und die Flüssigphase nicht im Gleichgewicht. Man erhält daher die Partialdrucke der kondensierbaren Komponenten für die nicht im Gleichgewicht befindliche Gasphase $\Sigma p_j^{\infty}$, wobei j eine Laufvariable für die Anzahl der verschiedenen dampfförmigen Komponenten darstellt.

Im Rahmen des erfindungsgemäßen Verfahrens wird nun für diese Gasphase eine isotherme Gleichgewichtsstufe berechnet.

Aus dieser Berechnung erhält man die Partialdrucke der kondensierbaren Komponenten im isothermen Gleichgewicht $\Sigma p_j^{\infty}$, Glw.

Aus den Ergebnissen für die adiabatische Gasphase und die isotherme Gesphase laßt sich der Sättigungsgrad $S_i$ für jedes einzelne Waschkolonnensegment nach Gleichung 1 (Gl-1)

$$S_i = \frac{\Sigma p_j^{\infty}}{\Sigma p_{i\,,Glw}^{\infty}} \qquad\qquad Gl\text{-}1$$

berechnen.

Mit den so berechneten Sättigungsgraden $S_i$ kann nun abgeschätzt werden, ob eine für die Aktivierung von kleinen oder schlecht benetzbaren Keimen notwendige Übersättigung erreicht wird.

Für eine solche Abschätzung werden die kritischen Keimdurchmesser für verschiedene Sättigungsgrade $S_i$ (Köhler-Kurven) berechnet. Der Verlauf solcher Köhler-Kurven ist von der Benetzbarkeit der partikelförmigen Verunreinigungen abhängig. Zur Berechnung von Köhler-Kurven für unterschiedlich benetzbare oder lösliche partikelförmige Verunreinigung sei auf die Habilitationsschrift "Messen, Konditionieren und Abscheiden feinster Aerosolpartikel" von Dr. Ing. Bernd A. Sachweh, Fachbereich Maschinenbau und Verfahrenstechnik der Universität Kaiserslautern, 1996, verwiesen. Hier gelten beispielsweise für durch die Waschflüssigkeit benetzbare, lösliche oder schlecht benetzbare Partikel insbesondere die Gleichungen 2, 3 und 4

$$\ln S = \frac{2\sigma_{gl}v_{l}'}{kTR_{p}^{\bullet}} = \frac{2\sigma_{gl}M_{w}}{\rho_{l}\Re TR_{p}^{\bullet}} \qquad \text{Gl-2}$$

$$\ln S = \frac{2\sigma_{gl}M_{w}}{\rho_{l}\Re TR_{p}^{\bullet}} + \ln(\gamma_{w}) - \ln\left(l + \frac{3im_{s}M_{w}}{M_{s}\rho_{l}4\pi R_{p}^{\bullet 3}}\right) \qquad \text{Gl-3}$$

$$\ln S = \left[-\frac{8\pi\sigma_{12}^{3}f(m,\chi)v_{l}'^{2}}{3k^{3}T^{3}\ln[l/(4\pi R_{p}^{2}K)]}\right]^{1/2} \qquad \text{Gl-4,}$$

die in der oben genannten Habilitationsschrift als Gleichungen 2-12, 2-14b oder 2-18 auf den Seiten 8, 9 und 12 beschrieben sind.

Aus einer so berechneten Köhler-Kurve läßt sich für die berechneten Partikel die Information erhalten, welcher Sättigungsgrad eine Keimbildung mit welcher Partikelgröße zuläßt. Der Sättigungsgrad sollte so eingestellt werden, daß Partikel bis zu einer Größe von etwa 50 nm zur Keimbildung beitragen können. Kleinere Partikel sollten für eine Keimbildung nicht berücksichtigt werden.

Auf die in dieser Habilitationsschrift aufgeführten Gleichungen und Rechenverfahren wird hiermit ausdrücklich Bezug genommen, die Offenbarung der Habilitationsschrift gilt als Teil der Offenbarung des vorliegenden Textes.

Eine weitere Möglichkeit zur Abschätzung, ob die mit den eingestellten Betriebsparametern erzielbare Übersättigung zur Abscheidung der partikelförmigen Verunreinigungen ausreicht, läßt sich aus einer Berechnung des adiabat kondensierbaren Dampfs $D_{ad}$ erhalten. Berechnet man mit der übersättigten Gasphase eine adiabate Gleichgewichtsstufe, so ergibt sich nach Gleichung 5 der adiabat kondensierbare Dampf $D_{ad}$ als

$$D_{ad} = \frac{M_{K,ad}}{V_{G,tr}^{N}} \qquad \text{Gl-5}$$

wobei $M_{K,ad}$ den Kondensatstrom in g/h und $V_{G,tr}^{N}$ den ohne Tielkühlung nicht kondensierbaren Anteil der Gasphase im Normzustand in $m^{3}$/h darstellt. Für den Grenzfall, daß die Kondensationswärme nicht an ein Kühlmedium abgegeben wird, kann maximal diese Dampfmenge auf Kondensationskeimen auskondensieren. Aus der Kenntnis der Zahl an Kondensationskeimen pro Volumen Gasstrom und der errechneten Menge an adiabat kondensierbarem Dampf läßt sich nun eine durchschnittliche Tropfengröße des entstehenden Nebels unter Idealbedingungen errechnen. Damit kann eine grobe Abschätzung des maximal möglichen Tropfenwachstums erfolgen. Es ist hierbei zu beachten, daß der tatsächlich erzielte Tropfendurchmesser in der Regel unterhalb des errechneten Werts liegen wird. Eine auf die oben genannte Art und Weise durchgeführte Abschätzung der maximal möglichen Tropfengröße sollte daher in der Praxis mindestens zu einem Wert von etwa 4 µm, vorzugsweise jedoch mehr, führen.

Führt man mit Hilfe der errechneten Sättigungsgrade $S_{i}$ in Kenntnis der im Gasstrom vorkommenden partikelförmigen Verunreinigungen und deren Benetzungsverhalten die Berechnung von Köhler-Kurven durch, so läßt sich abschätzen, ob der in jedem Segment erzielte Sättigungsgrad ausreicht, um partikelförmige Verunreinigungen einer bestimmten Größe abzuscheiden In einer bevorzugten Ausführungsform der Erfindung wird anhand der Köhler-Kurve der Sättigungsgrad so eingestellt, daß die kleinsten abscheidbaren Partikel einen Keimradius von etwa 50 nm aufweisen.

In einer weiteren bevorzugten Ausführungsform wird die Information über die segmentabhängigen Sättigungsgrade $S_{i}$ mit Hilfe einer oder mehrerer weiterer Gleichungen dazu benutzt, um das Tropfenwachstum in Abhängigkeit von der Zeit beim Passieren der Waschkolonne zu berechnen.

Hierzu werden die Gleichungen 6, 7 und 8

$$\frac{dR_p}{dt} = \frac{S-l}{\rho_l R_p}\left[\frac{L^2}{\lambda_L R_V T_\infty^2} + \frac{p\text{-}Sp_{vs}(T_\infty)}{pD_{vg}\rho_{vs}(T_\infty)}\right]^{-1} = \frac{A_R(T,p,S)}{R_p} \qquad \text{Gl-6}$$

$$\frac{dR_p}{dt} = \frac{S-l-\dfrac{2\sigma_{gl}M_W}{\rho_l \Re T R_p}}{\rho_l R_p\left[\dfrac{L^2}{\lambda_L R_V T_\infty^2} + \dfrac{p-Sp_{vs}(T_\infty)}{pD_{vg}\rho_{vs}(T_\infty)}\right]} \qquad \text{Gl-7}$$

$$\frac{dR_p}{dt} = \frac{S-l-\dfrac{2\sigma_{gl}M_l}{\rho_l \Re T R_p}+\dfrac{3im_sM_W}{M_S\rho_l 4\pi R_p^3}}{\rho_l R_p\left[\dfrac{L^2}{\lambda_L R_V T_\infty^2} + \dfrac{p-Sp_{vs}(T_\infty)}{pD_{vg}\rho_{vs}(T_\infty)}\right]} \qquad \text{Gl-8}$$

benutzt, die als Gleichungen 2-36, 2-37 und 2-38 auf Seiten 20 und 21 der oben genannten Habilitationsschrift von Dr. Ing. Bernd A. Sachweh beschrieben sind. Aus den so erhaltenen Informationen läßt sich nun eine optimale Betriebsweise der Waschkolonne erhalten.

In einer weiteren bevorzugten Ausführungsform wird die Menge an Waschflüssigkeit, die pro Zeiteinheit durch die Waschkolonne läuft (E), so eingestellt, daß sie mindestens 25 % der für die vorgegebene Kolonne maximal möglichen Zulaufmenge (Flutgrenze) beträgt. Das Füllverhalten der Kolonne wird hier Anhand des Zulaufparameters Z (Zulaufgeschwindigkeit) ausgedrückt.

Unter dem Zulaufparameter Z wird der Quotient aus der pro Zeiteinheit in die Waschkolonne eintretenden Flüssigkeitsmenge E dividiert durch die maximal pro Zeiteinheit mögliche austretende Flüssigkeitsmenge A verstanden. Für einen Wert von Z = E/A = 1 befindet sich die Waschkolonne damit an der Flutgrenze, d. h., es verläßt nur genauso viel Waschflüssigkeit die Kolonne wie ihr zuströmt. Ist der Wert für Z größer als 1, so strömt mehr Wasser zu als abströmen kann, d. h., die Waschkolonne füllt sich mit Waschflüssigkeit. Ist der Wert für Z kleiner als 1, so herrscht ein in der Regel normaler Betriebszustand, d. h., es fließt weniger Wasser zu als pro Zeiteinheit abfließen kann. In einer bevorzugten Ausführungsform der vorliegenden Erfindung wird der Zulauf der Waschflüssigkeit so eingestellt, daß Z mindestens 0,25 beträgt. In einer weiteren bevorzugten Ausführungsform der Erfindung wird der Zulauf der Waschflüssigkeit jedoch so eingestellt, daß Z mindestens 0,5, vorzugsweise mindestens etwa 0,7 beträgt. Bei derart hohen Werten für Z erreicht man besonders hohe Abscheidungsgrade für partikelförmige Verunreinigungen gleichzeitig mit besonders hohen Abscheidungsgraden für gasförmige Verunreinigungen.

Die vorliegende Erfindung wird durch die Zeichnung näher erläutert. Es zeigt:

Fig. 1      eine Darstellung des Abscheidegrads in Abhängigkeit von der Partikelgröße bei Z = 0,25 und Z = 0,75,

Fig. 2      eine schematische Darstellung der segmentweisen Berechnung des gekoppelten Stoff- und Wärmeübergangs in einer Waschkolonne, die Berechnung der isothermen Gleichgewichtsstufe und der Übersättigung $S_i$ sowie der adiabatischen Gleichgewichtsstufe und der Menge an adiabatisch kondensierbarem Dampf

$D_{ad}$.

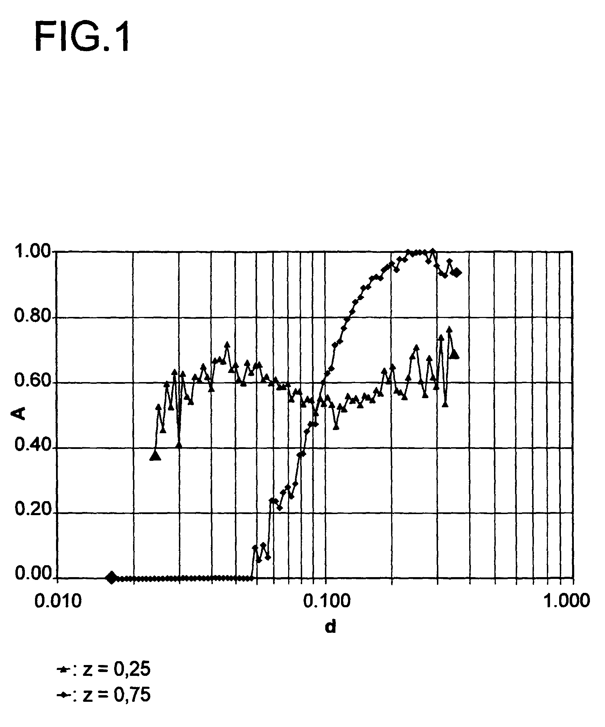

In Fig. 1 steht A für den Abscheidegrad und d für die Partikelgröße in μm. Der Abscheidegrad A für eine bestimmte Partikelgröße berechnet sich dabei als Quotient aus der Zahl der abgeschiedenen Partikel und der Zahl der ursprünglich vorhandenen Partikel. Aus Fig. 1 geht daher eindeutig hervor, daß für Z = 0,25 ein relativ konstanter Abscheidegrad von etwa 0,6 für nahezu alle Partikelgrößen herrscht. Erhöht man die Waschflüssigkeitszufuhr pro Zeiteinheit, so daß Z beispielsweise 0,75 beträgt, so erkennt man aus Fig. 1, daß ein Abscheidemaximum im Bereich von mehr als etwa 0,1 bis etwa 0,4 μm erzielt werden kann. Dies ist in der Praxis erwünscht, da partikelförmige Verunreinigungen in einer Größe von weniger als 0,1 μm in der Regel nicht als emissionsrelevant angesehen werden. In Einzelfällen kann es jedoch vorkommen, daß die Entfernung solcher Partikel erwünscht ist. Das erfindungsgemäße Verfahren zeigt durch die Steuerung des Zulaufparameters Z einen Weg auf, wie mit nur einer Parameteränderung beiden Sachverhalten Rechnung getragen werden kann.

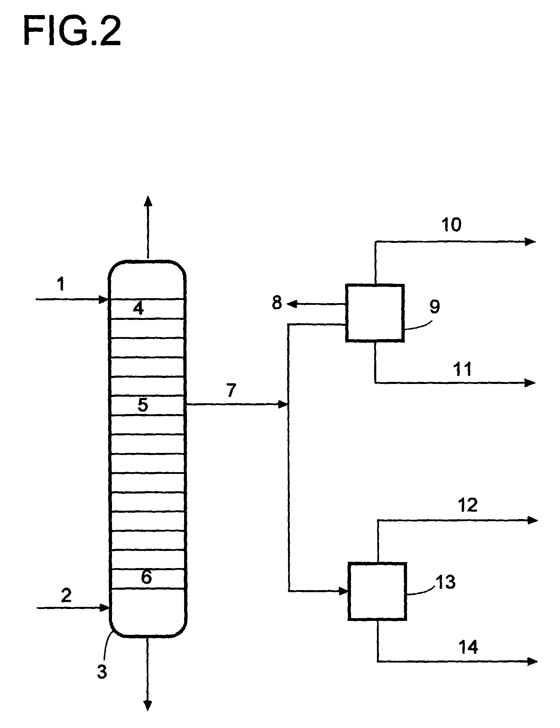

Fig. 2 zeigt die segmentweise Berechnung des gekoppelten Stoff- und Wärmeübergangs in einer Waschkolonne (3). Am unteren Ende der Kolonne tritt ein dampfgesättigter Gasstrom ein (2), am oberen Ende der Kolonne wird im Gegenstrom kalte Waschflüssigkeit zugeführt (1). Die Waschkolonne wird rechnerisch in Segmente aufgeteilt. So findet sich beispielsweise am oberen Ende der Waschkolonne das Segment Nr. 1 (4), weiterhin n - 1 Segmente i (5) und ein Segment n (6) am unteren Ende der Waschkolonne.

Zunächst wird die Summe der Partialdrücke $\Sigma p_i^\infty$ sowie die Gastemperatur $T_{gas,i}^\infty$ (7) errechnet. Aus jedem Segment i wird dann ein Pseudogasstrom i abgezogen. Für diesen läßt sich eine isotherme Gleichgewichtsstufe mit der Temperatur $T_{gas,i}^\infty$ (9) errechnen, aus der nach Berücksichtigung des Wärmeabzugs (8) zum einen die Partialdrücke in der Gasphase im Gleichgewichtszustand $\Sigma p_i^\infty{}_{,Glw}$ erhältlich sind (10). Weiterhin läßt sich aus dem gasförmigen Pseudostrom i (7) eine adiabate Gleichgewichtsstufe mit der Temperatur $T_{adiabat,i}^\infty$ (13) erhalten. Aus dieser Gleichgewichtsstufe läßt sich zum einen die Summe der Partialdrücke in der Gasphase $\Sigma p_i^\infty{}_{,adiabat}$ (12) sowie die Menge an adiabatisch kondensierbarem Dampf $D_{ad}$ (14) erhalten.

Wenn im Rahmen des erfindungsgemäßen Verfahrens die Zahl und Größe der partikelförmigen Verunreinigungen eine Rolle spielen, so stehen dem Fachmann zur Bestimmung dieser Zahl geeignete Meßverfahren zur Verfügung. Geeignet ist beispielsweise ein kommerzielles Meßsystem (Scanning Mobility Particle Sizer, TSI Modell 3934), das einen Kondensationspartikelzähler mit einem differentiellen elektrischen Mobilitätsanalysator kombiniert. Ein solches Meßsystem ermöglicht beispielsweise mit hoher Auflösung die Erfassung von Partikeln im Größenbereich von etwa 16 bis etwa 1.000 nm. Zur Messung breiterer Größenverteilungen über den oben spezifizierten Bereich hinaus läßt sich beispielsweise ein modifizierter optischer Partikelzähler (OPZ, Bauart Umhauer, wie in "Particle Size Distribution Analysis by Scattered Light Measurements using an optically defind measuring volume", J. Aerosol Sci. 14 (1983) S. 765 bis 770 beschrieben), einsetzen. Zu weiteren geeigneten Meßverfahren sei auf die oben genannte Habilitationsschrift von Dr. Ing. Bernd A. Sachweh verwiesen.

## Symbolverzeichnis:

| | | | |
|---|---|---|---|
| $\lambda_L$ | : | Wärmeleitfähigkeit des umgebenden Mediums (Luft) | [W/(mK)] |
| $A$ | : | Abscheidegrad | |
| $\rho_l$ | : | Dichte der Partikel (Flüssigkeit) | [kg/m$^3$] |
| $\rho_v$ | : | Partialdichte des Dampfes | [kg/m$^3$] |
| $\rho_{vs}$ | : | Partialdichte des Dampfes im Sättigungszustand | [kg/m$^3$] |
| $\sigma_{gl}$ | : | Oberflächenspannung Flüssigkeit gegen Gas | [N/m] |

| | | | |
|---|---|---|---|
| $\sigma_{12}$ | : | Oberflächenspannung Phase 1 - Phase 2 | [N/m] |
| d | : | Partikeldurchmesser | [μm] |
| $D_{vg}$ | : | Diffusionskonstante für Wasserdampf in Luft | [m$^2$/s] |
| i | : | *van't Hoff* - Faktor (= 2 für NaCl, wenn dieses vollständig dissoziiert) | |
| k | : | *Boltzmann*-Konstante ($1.38066 \ 10^{-23}$) | [J/K] |
| K | : | Agglomerations-/Koagulationskoeffizient | [m$^3$/s] |
| L | : | latente Kondensationswärme | [J/kg] |
| m | : | Massenstrom, allgemein | [kg/s] |
| $M_L$ | : | Molmasse Luft | [kg/kmol] |
| $M_S$ | : | Molmasse Salz | [kg/kmol] |
| $M_W$ | : | Molmasse Wasser | [kg/kmol] |
| p | : | Gesamtdruck | [N/m$^2$] |
| $P_{VS}$ | : | Partialdruck Wasserdampf im Sättigungszustand (Dampf/Luft Gemisch) | [N/m$^2$] |
| $\mathfrak{R}$ | : | universelle Gaskonstante | [J/(mol K)] |
| $R_p$ | : | Partikelradius | [m] |
| $R_p^*$ | : | Partikelradius im Gleichgewicht | [m] |
| $R_V$ | : | Gaskonstante des Dampfes | [J/(kgK)] |
| T | : | Temperatur | [K] |
| $T_\infty$ | : | Temperatur für r $\rightarrow \infty$ | [K] |
| Z | : | Zulaufparameter | |

**Patentansprüche**

1. Verfahren zur Entfernung von gasförmigen Verunreinigungen und Aerosolen aus einem dampfgesättigten Gasstrom, bei dem ein Gasstrom, enthaltend

    a) mindestens eine in einer Waschflüssigkeit gegebenenfalls unter Salzbildung lösliche gasförmige Verunreinigung und
    b) mindestens ein Aerosol mit einer Partikelgröße von 0,01 bis 10 μm,

mit einer Strömungsgeschwindigkeit von mindestens 0,5 m/s und einer Temperatur von 30°C bis 100°C in einer Waschkolonne, die eine innere Oberfläche von 50 bis 1.000 m$^2$/m$^3$ aufweist, gegebenenfalls nach vorangehender Sättigung mit Dampf mit einer Waschflüssigkeit, die eine Zulaufgeschwindigeit Z zur Waschkolonne aufweist, in Kontakt gebracht. wird deren Temperatur um mindestens 2°C geringer ist als die Temperatur des Gasstroms, wobei sich eine Dampfphase ausbildet, deren Sättigungsgrad S größer als 1 ist und die gasförmigen und partikelförmigen Verunreinigungen aus dem Gasstrom entfernt werden.

2. Verfahren nach Anspruch 1, dadurch gekennzeichnet, daß die Abschätzung des Minimalwertes für S der zur Abscheidung der partikelförmigen Verunreinigungen erforderlich ist, über eine Berechnung der adiabatisch kondensierbaren Dampfmenge erfolgt, wobei die Menge des adiabatisch kondensierbaren Dampfes in einem Volumenelement der Waschkolonne so groß sein muß, daß bei vollständiger Kondensation der gesamten Menge des adiabatisch kondensierbaren Dampfes in einem Volumenelement durchschnittlich pro Partikel im gleichen Volumenelement ein Kondensattropfen mit einem Durchmesser vom wenigstens 2 μm entsteht.

3. Verfahren nach einem der Ansprüche 1 oder 2, dadurch gekennzeichnet, daß zur Ermittlung des optimalen Sättigungsgrades S eine Berechnung der Köhler-Kurven für die im Gasstrom vorliegenden Partikel erfolgt.

4. Verfahren nach einem der Ansprüche 1 bis 3, dadurch gekennzeichnet, daß die Werte für die Strömungsgeschwindigkeit des Gasstroms, die Temperatur des Gasstrorns, die innere Oberfläche der Waschkolonne und die Temperatur der Waschflüssigkeit durch eine Simulation des Tropfenwachstums pro Zeiteinheit bei einer axialen Durchströmung der Waschkolonne durch den Gasstrom ermittelt werden.

5. Verfahren nach einem der Ansprüche 1 bis 4, dadurch gekennzeichnet, daß der Zulaufparameter (Zulaufgeschwindigkeit) Z mindestens 0,25 beträgt.

6. Verfahren nach Anspruch 5, dadurch gekennzeichnet, daß Z mindestens 0,7 beträgt.

7. Verfahren nach einem der Ansprüche 1 bis 6, dadurch gekennzeichnet, daß als Waschflüssigkeit die Verbindung eingesetzt wird, mit deren Dampf der Gasstrom gesättigt ist.

8. Verfahren nach Anspruch 1 bis 7, dadurch gekennzeichnet, daß als Waschflüssigkeit Wasser oder eine wäßrige Salzlösung oder eine wäßrige Säure oder Base eingesetzt wird.

9. Verfahren nach einem der Ansprüche 1 bis 8, dadurch gekennzeichnet, daß die Temperatur des Gasstroms 40 bis 90 °C beträgt.

10. Verfahren nach einem der Ansprüche 1 bis 9, dadurch gekennzeichnet, daß der Durchmesser der Waschkolonne 0,1 bis 4 m beträgt.

11. Verfahren nach einem der Ansprüche 1 bis 10, dadurch gekennzeichnet, daß die Länge der Waschkolonne 0,5 bis 10 m beträgt.

12. Verfahren nach einem der Ansprüche 1 bis 11, dadurch gekennzeichnet, daß die Kolonne mit Füllkörpern mit einem Durchmesser von 3 bis 50 mm bestückt ist und die Kolonne eine innere Oberfläche von 300 bis 600 m$^2$/m$^3$ aufweist.

13. Verfahren nach einem der Ansprüche 1 bis 12, dadurch gekennzeichnet, daß die Waschflüssigkeit eine Temperatur von 2 bis 50°C aufweist.

14. Verfahren nach einem der Ansprüche 1 bis 13, dadurch gekennzeichnet, daß sich der dampfgesättigte Gasstrom und die Waschflüssigkeit im Gegenstrom befinden.

# FIG.1

−: z = 0,25
−: z = 0,75

# FIG.2